# EUROPÄISCHE PATENTSCHRIFT

(11) **EP 0 447 466 B1**
(45) Veröffentlichungstag und Bekanntmachung des Hinweises auf die Patenterteilung: **23.03.1994**
(21) Anmeldenummer: 90900792.4
(22) Anmeldetag: 21.11.1989
(51) Int. Cl.: G11B 7/00, G11B 7/12

(54) **OPTISCHES AUFZEICHNUNGS- UND/ODER WIEDERGABE-GERÄT**
OPTICAL RECORDING AND/OR REPRODUCING APPARATUS
APPAREIL D'ENREGISTREMENT ET/OU DE REPRODUCTION OPTIQUE

(30) Priorität: 30.11.1988 DE 3840311
(43) Veröffentlichungstag der Anmeldung: 25.09.1991
(73) Patentinhaber: Deutsche Thomson-Brandt GmbH, 78003 Villingen-Schwenningen (DE)
(72) Erfinder: HAKE, Martin, D-7730 Villingen-Schwenningen (DE)
(86) Internationale Anmeldenummer: EP8901413
(87) Internationale Veröffentlichungsnummer: WO9006576

(56) Entgegenhaltungen:
- EP-A- 0 045 537
- JP-A-63 255 839
- JP-A-63 273 226
- Patent Abstracts of Japan, Band 11, Nr. 144, (P-574)(2591), 12. Mai 1984;& JP-A-61280043
- Patent Abstracts of Japan, Band 11, Nr. 203, (P-591)(2650), 2. Juli 1987;& JP-A-6224448
- Patent Abstracts of Japan, Band 11, Nr. 62, (P-551)(2509), 25. Februar 1987; & JP-A-61224151
- Patent Abstracts of Japan, Band 12, Nr. 408, (P-778)(3255), 28. Oktober 1988;& JP-A-63146235
- Patent Abstracts of Japan, Band 5, Nr. 73, (P-61)(745), 15. Mai 1981;& JP-A-5622228
- Patent Abstracts of Japan, Band 13, Nr. 185, (P-865)(3533), 2. Mai 1989;& JP-A-113235
- Patent Abstracts of Japan, Band 13, Nr. 430, (P-937)(3778), 26. September 1989;& JP-A-1162240
- Patent Abstracts of Japan, Band 8, Nr. 171, (P-293)(1608), 8. August 1984;& JP-A-5965954
- Patent Abstracts of Japan, Band 12, Nr. 396, (P-774)(3243), 21. August 1988;& JP-A-63136371
- Patent Abstracts of Japan, Band 11, Nr. 62, (P-551)(2509), 25. Februar 1987;& JP-A-61224190
- Patent Abstracts of Japan, Band 9, Nr. 6, (P-326)(1729), 11. Januar 1985;& JP-A-59154626

## Beschreibung

Die Erfindung betrifft ein optisches Aufzeichnungs- und/oder Wiedergabe-Gerät mit einer Aufzeichnungs- und/oder Abtastvorrichtung, die mit einer Linse ausgerüstet ist, wobei Mittel oder Maßnahmen vorgesehen sind, welche die Linsenoberfläche weitgehend staubfrei halten und wobei der Informationsträger, eine rotierende Scheibe, auf einem Plattenteller liegt, der von einem Motor angetrieben wird.

Es hat sich beim Betrieb derartiger Geräte, insbesondere bei CD-Spielern, gezeigt, daß abgelagerter Staub auf Linsenoberflächen von Abtastsystemen zu einer erheblichen Verringerung der Abtastqualität führen kann. Das äußert sich z.B. in einer schlechten Musikwiedergabe.

Auch bei Plattenspielern für Analog-Schallplatten mit mechanischer Abtastung einer Tonspur mittels einer Abtastspitze verschlechtert Staubansammlung an dieser die Wiedergabe. Bei einem Abtastsystem der Fa. Shure Brothers, Typ VR15, wurde deshalb ein kleines Bürstchen derart am Abtastsystem angeordnet, daß es dem Abtaster voraus eine Anzahl benachbarter Rillen von Staub frei fegte.

Bekannt wurde auch eine Lösung, bei welcher der Abtaster auf seinem Weg von und/oder zu der Tonarmablage eine kleine Bürste passierte, wobei Staub von der Abtasterspitze abgestreift wurde. Hersteller war die Fa. ELAC, Kiel.

Eine Vorrichtung zum Wegblasen und/oder Absaugen kleine Partikel bei dem Aufnahmevorgang von Platten nach dem TED-Verfahren von AEG-Telefunken wurde ebenfalls bekannt.

Aus der JP-A-63 255839 ist ein optisches Aufzeichnungs- und Wiedergabegerät bekannt, das mit mit einer Abtastvorrichtung, einer Linse und einer in der Endposition der Abtastvorrichtung die Linse staubschützend abdeckenden Vorrichtung ausgestattet ist.

In der JP-A-61 224151 ist ein optisches Aufzeichnungs- und Wiedergabegerät beschrieben, dessen Abtastvorrichtung in Ruhestellung unter einer Schutzhaube vor Staub geschützt ist.

Aus der JP-A-61 280043 ist ein optisches Aufzeichnungs- und Wiedergabegerät mit einer Objektivlinse und einer optischen Abtastvorrichtung bekannt.

Zur Reinigung wird die Objektivlinse der optischen Abtastvorrichtung aus dem Lesebereich unter eine bürstenförmige Reinigungsvorrichtung gefahren. Unter der Reinigungsvorrichtung wird die Objektivlinse hin- und herbewegt, um Staub von ihrer Oberfläche zu bürsten. Nach Ende der Reinigung bleibt die Objektivlinse in der Ruhestellung unter der bürstenförmigen Reinigungsvorrichtung, damit sie vor Staub geschützt ist.

Aus der JP-A-59 065954 ist ein mittels einer Elektrode kapazitiv eine Platte abtastendes Wiedergabegerät bekannt.

Die Oberfläche der Elektrode wird von einer rotierenden Bürste gereinigt. Zusätzlich vibriert der Arm, auf dem die Elektrode sitzt, um die Reinigungswirkung zu verstärken.

Aus der JP-A-63 136371 ist ein optisches Aufzeichnungs- und Wiedergabegerät mit einer Objektivlinse und einer optischen Abtastvorrichtung bekannt.

Auf der Oberfläche einer Reinigungsplatte sitzt eine Bürste, die den Staub von der Objektivlinse bürstet.

Aus der JP-A-63 273226 ist ebenfalls ein optisches Aufzeichnungs- und Wiedergabegerät mit einer Objektivlinse, einer optischen Abtastvorrichtung und einer Reinigungsplatte bekannt.

Störende Staubteilchenablagerungen auf der Linsenoberfläche des optischen Systems zu reduzieren bzw. zu entfernen, ist die der Erfindung zugrunde liegende Aufgabe.

Diese Aufgabe wird erfindungsgemäß nach Anspruch 1 gelöst. Weitere Einzelheiten und Ausgestaltungen der Erfindung sind den übrigen Ansprüchen zu entnehmen.

Nach der Erfindung kann mit geeigneten Mitteln die Ablagerung von Staub auf der Linsenoberfläche der optische Aufzeichnungs- und/oder Abtastvorrichtung vermindert bzw. verhindert werden.

An Hand der Zeichnung werden nachfolgend zwei Ausführungsbeispiele der Erfindung erläutert. Diese zeigt in
- Figur 1: in stark vereinfachter Darstellung eine von der Aufzeichnungs- und/oder Abtastvorrichtung betätigte mechanische Linsenabdeckung in Draufsicht;
- Figur 2: das Prinzip einer Blasvorrichtung in Draufsicht, wobei ein Luftstrom über die Linsenoberfläche gerichtet ist.

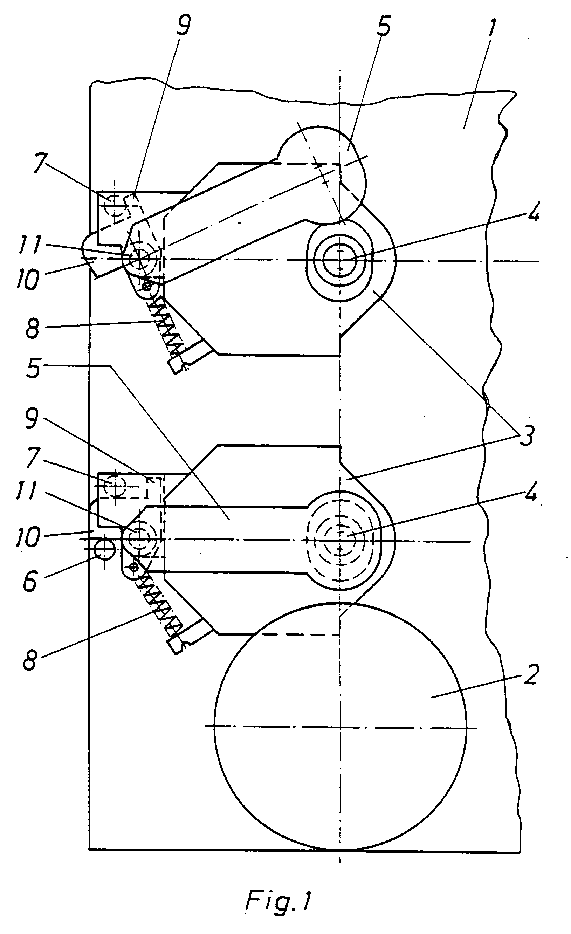

Figur 1 zeigt eine mechanische Vorrichtung, die von der Aufzeichnungs- und/oder Abtastvorrichtung 3 betätigt wird, wenn diese in ihre Ruhe- oder Endposition nahe dem Platterteller 2 bewegt wird. Die Aufzeichnungs- und/oder Abtastvorrichtung 3 ist außerdem in einer Position innerhalb ihres Arbeitsbereiches eingezeichnet, wobei die Linse 4 freigegeben ist, indem die drehbewegliche Abdeckung 5 unter der Wirkung der Zugfeder 8 entgegen dem Uhrzeigerdrehsinn bis zum Anschlag 7 eines Armes 9 der Abdeckung 5 schwenkt. Wenn die Aufzeichnungs- und/oder Abtastvorrichtung 3 durch ihren Radial-Antrieb in die Ruheposition bewegt wird, schwenkt die Abdeckung 5 im Uhrzeigerdrehsinn bis zur gezeichneten Position, wobei die Abdeckung 5 die Linse 4 überdeckt und so vor Staub schützt. Diese Drehung wird gegen die Kraft der Zugfeder 8 bewirkt, sobald die Aufzeichnungs- und/oder Abtastvorrichtung 3 einen zweiten Arm 10 der Abdeckung 5 gegen einen am Chassis bzw. der Grundplatte 1 befestigten Anschlag 6 stößt. Das die Arme 9 und 10 aufweisende Teil ist mit der Abdeckung 5 starr verbunden und um die Achse 11 drehbar. Die Darstellung ist gebenüber der Wirklichkeit etwa 2-fach vergrößert gezeichnet.

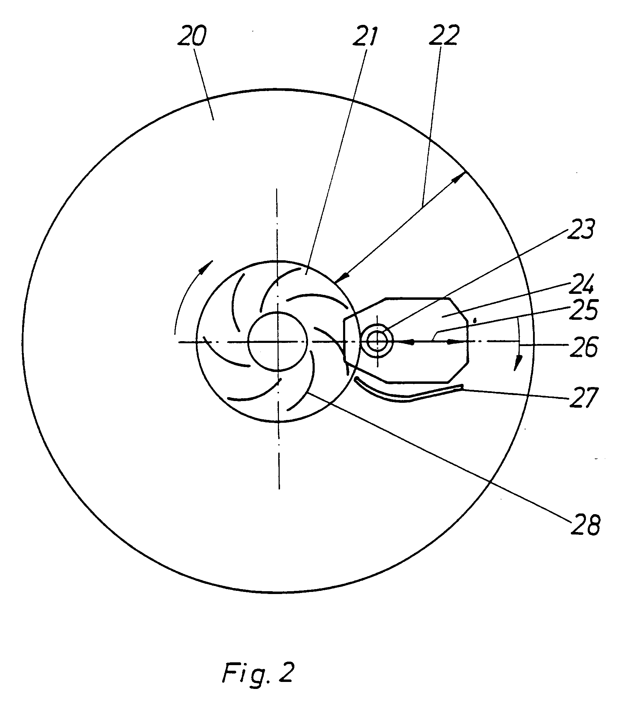

In etwa natürlicher Größe ist in Figur 2 eine Vorrichtung gezeigt, mit der ein gerichteter Luftstrom über die Linsenoberfläche erzeugt wird. In der Darstellung ist eine CD-Platte 20 durchsichtig zu denken, ebenso der darunter befindliche Plattenteller 21, der auf seiner Unterseite gekrümmte Rippen 28 aufweist. Diese erzeugen bei der schnellen Drehung des Plattentellers 21 in der angedeuteten Drehrichtung, Pfeil 26, einen Luftstrom, gerichtet durch das Ablenkteil 27 über die Oberfläche der Linse 23 auf der Obereite der Aufzeichnungs- und/oder Abtastvorrichtung 24. Die entgegengesetzt gerichteten Pfeile 25 sollen die radiale Bewegungsrichtung der Aufzeichnungs- und/oder Abtastvorrichtung 24 während des Spielbetriebs andeuten. Der radial gerichtete Doppelpfeil 22 soll den Antastbereich kennzeichnen.

## Patentansprüche

1. Optisches Aufzeichnungs- und/oder Wiedergabe-Gerät mit einer Aufzeichnungs- und/oder Abtastvorrichtung, die mit einer Linse ausgerüstet ist, wobei Mittel oder Maßnahmen vorgesehen sind, welche die Linsenoberfläche weitgehend staubfrei halten und wobei der Informationsträger, eine rotierende Scheibe (20), auf einem Plattenteller (21) liegt, der von einem Motor angetrieben wird, **dadurch gekennzeichnet**, daß die eine Seite des Plattentellers (21), die nicht zur Auflage der Scheibe (20) dient, mit Rippen (28) versehen ist, so daß ein Luftstrom erzeugt wird, der von Leitmitteln (27) über die Linsenoberfläche gelenkt wird.

2. Optisches Aufzeichnungs- und/oder Wiedergabe-Gerät nach Anspruch 1, **dadurch gekennzeichnet**, daß eine mechanische Vorrichtung, die von der Aufzeichnungs- und/oder Abtastvorrichtung (3) betätigt wird, wenn diese in ihre Ruhe- oder Endposition oder Bereitschaftsstellung gelangt, so ausgebildet ist, daß sie die Linse (4) in dieser Position staubschützend abdeckt.

3. Optisches Aufzeichnungs- und/oder Wiedergabe-Gerät nach Anspruch 2, **dadurch gekennzeichnet**, daß die mechanische Vorrichtung aus einem mehrarmigen Hebel besteht, dessen einer Arm (10) einen Anschlag (6) für die Aktivierung durch die optische Aufzeichnungs- und/oder Abtastvorrichtung (3) besitzt, und dessen anderer Arm (9) eine Abdeckung (5) für die Linse (4) aufweist, daß an dem Hebel ein Rückstellmittel (8) dafür sorgt, daß der Hebel beim Start des Gerätes die optische Aufzeichnungs- und/oder Abtastvorrichtung (3) aus der Ruheposition freigibt.

4. Optisches Aufzeichnungs- und/oder Wiedergabe-Gerät nach Anspruch 1, **dadurch gekennzeichnet**, daß eine ortsfeste Linsenabdeckung so angebracht ist, daß die Aufzeichnungs- und/oder Abtastvorrichtung bei Abschalten des Gerätes, ebenso wie bei Pause, in Bereitschaftsstellung und/oder bei der Wiederholung von Abtastvorgängen in eine solche Ruheposition oder Bereitschaftsstellung gesteuert wird, daß die Linsenabdeckung (5) die Linse (4) abdeckt.

5. Optisches Aufzeichnungs- und/oder Wiedergabe-Gerät nach Anspruch 4, **dadurch gekennzeichnet**, daß die Linsenabdeckung (5) auf ihrer der Linse (4) zugewandten Seite mit einer zur Entfernung von Staub geeigneten Auflage oder Beschichtung versehen ist.

6. Optisches Aufzeichnungs- und/oder Wiedergabe-Gerät nach Anspruch 1, 2, 3, 4 oder 5, **dadurch gekennzeichnet**, daß die Linsenabdeckung (5) über eine Zuführungs-Einrichtung mit einer Reinigungsflüssigkeit getränkt werden kann.

7. Optisches Aufzeichnungs- und/oder Wiedergabe-Gerät nach Anspruch 6, **dadurch gekennzeichnet**, daß an der Geräteaußenseite eine verschließbare öffnung zum Nachfüllen der Reinigungsflüssigkeit vorgesehen ist.

8. Optisches Aufzeichnungs- und/oder Wiedergabe-Gerät nach Anspruch 1, 2, 3, 4, 5, 6 oder 7, **dadurch gekennzeichnet**, daß die Linse (4) der Aufzeichnungs- und/oder Wiedergabevorrichtung gerüttelt wird.

9. Optisches Aufzeichnungs- und/oder Wiedergabe-Gerät mit einem Fokus- und/oder Spurregelkreis nach Anspruch 8, **dadurch gekennzeichnet**, daß der Grob- und/oder Feinantrieb des Spurregelkreises die Linse (4) rüttelt.

10. Optisches Aufzeichnungs- und/oder Wiedergabe-Gerät nach Anspruch 8 oder 9, **dadurch gekennzeichnet**, daß das Stellglied des Fokusregelkreises die Linse (4) rüttelt.

11. Optisches Aufzeichnungs- und/oder Wiedergabe-Gerät nach Anspruch 9 und 10, **dadurch gekennzeichnet**, daß die Rüttelfrequenz in radialer Richtung van der in Fokus-Richtung abweicht.

12. Optisches Aufzeichnungs- und/oder Wiedergabe-Gerät nach Anspruch 11, **dadurch gekennzeichnet**, daß die Rüttelfrequenz in radialer Richtung höher gewählt ist als in Fokus-Richtung.

13. Optisches Aufzeichnungs- und/oder Wiedergabe-Gerät nach Anspruch 4 oder 5, **dadurch gekennzeichnet**, daß die Linsenabdeckung bzw. ihre Auflage zwecks Erneuerung auswechselbar konstruiert ist.

14. Optisches Aufzeichnungs- und/oder Wiedergabe-Gerät nach einem oder mehreren der voranstehenden Ansprüche, **dadurch gekennzeichnet**, daß durch Steuerung der Aufzeichnungs- und/oder Abtastvorrichtung sicher gestellt wird, daß die Reinigung der Linse (4) auch bei Bedienerbefehlen wie Abschalten, Bereitschaft, Wiederholung und Pause vor und/oder nach Aktivierungsphasen der Aufzeichnungs- und/oder Abtastvorrichtung (3) durchgeführt werden.

15. Optisches Aufzeichnungs- und/oder Wiedergabe-Gerät nach einer oder mehreren der voranstehenden Ansprüche, **dadurch gekennzeichnet**, daß für den Fall eines versehentlichen Ziehens des Netzsteckers oder bei Netzausfall ein Energiespeicher die für die Steuerung der Reinigung notwendige Energie liefert.

16. Optisches Aufzeichnungs- und/oder Wiedergabe-Gerät nach einem oder mehreren der voranstehenden Ansprüche, **dadurch gekennzeichnet**, daß ein Zeitglied beim Ausschalten des Gerätes sicher stellt, daß die Aufzeichnungs- und/oder Abtastvorrichtung (3) in die Ruhe- und Reinigungsposition gelangt, bevor die Netzspannungsabschaltung wirksam wird.

## Claims

1. Optical recording and/or reproduction apparatus having a recording and/or scanning device which is equipped with a lens wherein means or measures are provided which keep the surface of the lens dust free to a large extent and wherein the information carrier, a rotating disc (20), rests on a turn-table (21) which is driven by a motor, characterised in that, the one side of the disc (21) which does not serve for the placement of the disc (20), is provided with ribs (28) so that an air stream is produced which is guided over the surface of the lens by guide means (27).

2. Optical recording and/or reproduction apparatus in accordance with Claim 1, characterised in that, a mechanical device, which is actuated by the recording and/or scanning device (3) when this reaches its rest or end position or its standby position, is so constructed that it covers the lens (4) in this position in a dust-protecting manner.

3. Optical recording and/or reproduction apparatus in accordance with Claim 2, characterised in that, the mechanical device consists of a multi-armed lever whose one arm (10) has a stop (6) for actuation by the optical recording and/or scanning device (3) and whose other arm (9) has a cover (5) for the lens (4), that a return means (8) on the lever ensures that the lever releases the optical recording and/or scanning device (3) from the rest position upon starting of the apparatus.

4. Optical recording and/or reproduction apparatus in accordance with Claim 1, characterised in that, a fixed lens cover is so placed that the recording and/or scanning device is controlled into a standby position when the apparatus is switched off, and likewise for pauses, and/or is controlled into such a rest position or standby position during the repetition of scanning processes, that the lens cover (5) covers the lens (4).

5. Optical recording and/or reproduction apparatus in accordance with Claim 4, characterised in that, the lens cover (5) is provided, on its side facing the lens (4), with a layer or coating suitable for the removal of dust.

6. Optical recording and/or reproduction apparatus in accordance with Claim 1, 2, 3, 4 or 5, characterised in that, the lens cover (5) can be soaked with a cleaning fluid via a supply device.

7. Optical recording and/or reproduction apparatus in accordance with Claim 6, characterised in that, a closable opening for refilling the cleaning fluid is provided on the outer surface of the apparatus.

8. Optical recording and/or reproduction apparatus in accordance with Claim 1, 2, 3, 4, 5, 6 or 7, characterised in that, the lens (4) of the recording and/or reproduction device is vibrated.

9. Optical recording and/or reproduction apparatus having a focusing and/or tracking control loop in accordance with Claim 8, characterised in that, the coarse and/or fine drive means of the tracking control loop vibrates the lens (4).

10. Optical recording and/or reproduction apparatus in accordance with Claim 8 or 9, characterised in that, the adjusting member of the focusing control loop vibrates the lens (4).

11. Optical recording and/or reproduction apparatus in accordance with Claim 9 and 10, characterised in that, the vibration frequency in the radial direction differs from that in the focusing direction.

12. Optical recording and/or reproduction apparatus in accordance with Claim 11, characterised in that, the vibration frequency in the radial direction is selected to be higher than that in the focusing direction.

13. Optical recording and/or reproduction apparatus in accordance with Claim 4 or 5, characterised in that, the lens cover or its superimposed layer is constructed to be exchangeable for the purpose of replacement.

14. Optical recording and/or reproduction apparatus in accordance with one or more of the preceding Claims, characterised in that, it is ensured, by controlling the recording and/or scanning device, that the cleaning of the lens (4) is also carried out upon control operations by the user such as switching-off, standby, repeat and pause-before and/or after the active phases of the recording and/or scanning device (3).

15. Optical recording and/or reproduction apparatus in accordance with one or more of the preceding Claims, characterised in that, in the event of an accidental withdrawal of the mains plug or of a power failure, an energy storage means delivers the energy necessary for the control of the cleaning.

16. Optical recording and/or reproduction apparatus in accordance with one or more of the preceding Claims, characterised in that, upon switching the apparatus off, a timing member ensures that the recording and/or scanning device (3) reaches the rest and cleaning position before the switching off of the mains voltage becomes effective.

## Revendications

1. Appareil d'enregistrement et/ou de reproduction optique avec un dispositif d'enregistrement et/ou de balayage qui est équipé d'une lentille, des moyens ou mesures qui maintiennent la surface de la lentille pratiquement sans poussière étant prévus, et le support d'information, un disque rotatif (20), étant posé sur un plateau à disques (21) qui est entraîné par un moteur, **caractérisé en ce** que l'une des faces du plateau à disque (21), qui ne sert pas à l'appui du disque (20), est pourvue de nervures (28) si bien qu'un courant d'air, qui est dirigé par des moyens de guidage (27) au-dessus de la surface de la lentille, est produit.

2. Appareil d'enregistrement et/ou de reproduction optique selon la revendication 1, **caractérisé en ce** qu'un dispositif mécanique, qui est actionné par le dispositif d'enregistrement et/ou de balayage (3), lorsque celui-ci arrive dans sa position de repos ou d'extrémité ou en position d'attente, est configuré de telle manière qu'il recouvre la lentille (4) dans cette position en la protégeant de la poussière.

3. Appareil d'enregistrement et/ou de reproduction optique selon la revendication 2, **caractérisé en ce** que le dispositif mécanique se compose d'un levier à plusieurs bras dont l'un des bras (10) posséde une butée (6) pour l'activation par le dispositif d'enregistrement et/ou de balayage optique (3) et dont l'autre bras (9) présente un recouvrement (5) pour la lentille (4), qu'un organe de rappel (8) sur le levier veille à ce que le lever dégage le dispositif d'enregistrement et/ou de balayage optique (3) de la position de repos, lors du démarrage de l'appareil

4. Appareil d'enregistrement et/ou de reproduction optique selon la revendication 1, **caractérisé en ce** qu'un recouvrement de lentille stationnaire est fixé de telle manière que le dispositif d'enregistrement et/ou de balayage est commandé, lors de la mise hors circuit de l'appareil ainsi qu'en pause, en position d'attente et/ou lors de la répétition d'opérations de balayage, dans une position de repos ou une position d'attente telle que le recouvrement de la lentille (5) recouvre la lentille (4).

5. Appareil d'enregistrement et/ou de reproduction optique selon la revendication 4, **caractérisé en ce** que le recouvrement de la lentille (5) est pourvu, sur sa face tournée vers la lentille (4), d'un appui ou d'une enduction appropriée pour éliminer la poussière.

6. Appareil d'enregistrement et/ou de reproduction optique selon la revendication 1, 2, 3, 4 ou 5, **caractérisé en ce** que le recouvrement de la lentille (5) peut être imbibé de liquide de nettoyage par un dispositif d'amenée.

7. Appareil d'enregistrement et/ou de reproduction optique selon la revendication 6, **caractérisé en ce** qu'une ouverture qui peut être fermée est prévue sur la face extérieure de l'appareil pour remplir le liquide de nettoyage.

8. Appareil d'enregistrement et/ou de reproduction optique selon la revendication 1, 2, 3, 4, 5, 6 ou 7, **caractérisé en ce** que la lentille (4) du dispositif d'enregistrement et/ou de reproduction est vibrée.

9. Appareil d'enregistrement et/ou de reproduction optique avec un circuit de réglage de foyer et/ou de piste selon la revendication 8, **caractérisé en ce** que l'entraînement grossier et/ou fin du circuit de réglage de piste vibre la lentille (4).

10. Appareil d'enregistrement et/ou de reproduction optique selon la revendication 8 ou 9, **caractérisé en ce** que le composant de réglage du circuit de réglage de foyer vibre la lentille (4).

11. Appareil d'enregistrement et/ou de reproduction optique selon la revendication 9 et 10, **caractérisé en ce** que la fréquence de la vibration dans le sens radial diffère de celle dans le sens du foyer.

12. Appareil d'enregistrement et/ou de reproduction optique selon la revendication 11, **caractérisé en ce** que la fréquence de la vibration dans le sens radial est choisie plus grande que dans le sens du foyer.

13. Appareil d'enregistrement et/ou de reproduction optique selon la revendication 4 ou 5, **caractérisé en ce** que le recouvrement de la lentille ou son appui est construit interchangeable pour être remplacé.

14. Appareil d'enregistrement et/ou de reproduction optique selon l'une ou plusieurs des revendications précédentes, **caractérisé en ce** qu'il est assuré par commande du dispositif d'enregistrement et/ou de balayage que le nettoyage de la lentille (4) est effectué même lors d'ordres de l'utilisateur tels que mise hors circuit, attente, répétition et pause avant et/ou après des phases d'activation du dispositif d'enregistrement et/ou de balayage (3).

15. Appareil d'enregistrement et/ou de reproduction optique selon l'une ou plusieurs des revendications précédentes, **caractérisé en ce** qu'un accumulateur d'énergie fournit l'énergie à la commande du nettoyage pour le cas d'un débranchement inopiné de la fiche du secteur ou lors d'une panne de secteur.

16. Appareil d'enregistrement et/ou de reproduction optique selon l'une ou plusieurs des revendications précédentes, **caractérisé en ce** qu'un relais de temporisation assure, lors de la mise hors circuit de l'appareil, que le dispositif d'enregistrement et/ou de balayage (3) arrive en position de repos et de nettoyage avant que la mise hors circuit de la tension du secteur soit effective.
